# EUROPEAN PATENT APPLICATION

(11) **EP 0 577 577 A1**
(43) Date of publication of application: **05.01.1994**
(21) Application number: 93850142.6
(22) Date of filing: 28.06.1993
(51) Int. Cl.: B29C 49/22, B32B 27/00

(54) **Method for producing an article with a glossy surface by blow moulding**

(30) Priority: 02.07.1992 SE 9202046
(71) Applicant: AKTIEBOLAGET ELECTROLUX, S-105 45 Stockholm (SE)
(72) Inventor: Tornmalm, Karl Gunnar, S-118 23 Stockholm (SE)
(74) Representative: Erixon, Bo

(57) **Abstract**

This invention relates to a blow moulding method for producing a plastic article with a glossy surface. Two or several plastic layers are simultaneously extruded through an extrusion nozzle in order to create a tube shaped element which in plastic state is inserted into a mould and is blown against the walls of the mould. At least one of the plastic layers has a sufficient melt strenght for serving as a support structure of the element in its plastic state whereas one of the other layers is a surface layer intended to form the glossy surface. The vicat softening point of the support layer is at least five degrees higher than the vicat softening point of the surface layer.

## Description

This invention relates to a blow moulding method for producing an article with a glossy surface by extruding two or several plastic layers simultaneously through an extrusion nozzle in order to create a tube shaped element which in plastic state is inserted into a mould and is blown against the walls of the mould, at least one of the layers having sufficient melt strenght for serving as a support structure for the element in its plastic state whereas one of the other layers is a surface layer intended to form the glossy surface.

Plastic articles manufactured by means of such a method are previously known. Thus, EP 322 512 shows how an estetically appealing package is manufactured starting from a combination of different types of polyethen.

In order to achieve a smooth and glossy surface on the article produced the element has to be extruded continiously without interruptions and be inserted into a mould having a high temperature. The process is however sensitive for disturbances since the so called process window is small (i.e. the difference between the temperature giving the glossy surface and the temperature which is practically possible to use during the blow molding process because of the long cooling period).

It is also previously known to produce glossy articles, see WO 89/04754, by using a surface layer having a melt flow index differing from the melt flow index of the other layers or to warm up the surface layer to a higher temperature than the other layers. However, with regard to the temperature differences this method demands for a complicated equipment to give the materials their different temperatures and with regard to the melt flow index this method has a very little influence on the result.

In order to achieve a simple production equipment and to avoid the sensitiveness mentioned above it is, according to the present invention, suggested that such materials are used that the softening temperature of the surface layer is lower than the softening temperature of the support layer the softening temperature being defined by the so called vicat softening point (i.e. a standardized mehod for measuring the shape durability when the material is heated). Thus, choosing the material with regard to the vicat softening point has a major influence on the result.

To make the method industrially usable for conventional coextrusion technique such materials are choosen that the inner layer is stiff when the mould is opened whereas the surface layer need not to be so. The mould temperature which is necessary depends on the softening temperature of the surface layer and can be considerably lower than this temperature since the plastic is considerably warmer when it is shaped. For instance for polypropylene the vicat softening point is normally between 135 - 155 °C whereas the mould temperature which is necessary is between 100 - 120 °C. For amorphous polymeric material the difference between the mould temperature which is necessary and the vicat softening point is less.

It has been proved that it is advantageous if the temperature properties for the material in the support layer and in the surface layer have a certain relation with respect to each other. Thus, the vicat softening point of the surface layer has to be at least 5 degrees higher than the vicat softening point of the surface layer. This means that the support layer, which has the largest thickness and mainly gives the article its mechanical properties, solidifies before the surface layer, which gives the article its desired gloss, so that the article becomes dimension stable quicker and can be taken out from the mould. It should in this connection be said that it of course is possible to simultaneously extrude additional layers between the support layer and the surface layer if it for any reason should be desirable.

## Claims

1. Blow moulding method for producing a plastic article with a glossy surface by extruding two or several plastic layers simultaneously through an extrusion nozzle in order to create a tube shaped element which in plastic state is inserted into a mould and is blown against the walls of the mould, at least one of the plastic layers having sufficient melt strenght for serving as a support structure of the element in its the plastic state whereas one of the other layers is a surface layer intended to form the glossy surface, **caracterized in** that the vicat softening point of the support layer is at least five degrees higher than the vicat softening point of the surface layer.

2. Method according to claim 1, **caracterized in** that the thickness of the support layer is greater than the thickness of the surface layer.
